# EUROPÄISCHE PATENTSCHRIFT

(11) **EP 3 268 631 B1**
(45) Veröffentlichungstag und Bekanntmachung des Hinweises auf die Patenterteilung: **04.12.2019**
(21) Anmeldenummer: 16708346.8
(22) Anmeldetag: 10.02.2016
(51) Int. Cl.: F16F 15/32, F16F 15/14

(54) **DREHMOMENTÜBERTRAGUNGSEINRICHTUNG**
TORQUE TRANSMISSION DEVICE
DISPOSITIF DE TRANSMISSION DE COUPLE

(30) Priorität: 11.03.2015 DE 102015204320
(43) Veröffentlichungstag der Anmeldung: 17.01.2018
(73) Patentinhaber: Schaeffler Technologies AG & Co. KG, 91074 Herzogenaurach (DE)
(72) Erfinder: FISCHER, Alexandre, 67000 Strasbourg (FR); STRASSER, Pascal, 67250 Aschbach (FR)
(86) Internationale Anmeldenummer: PCT/DE2016/200085
(87) Internationale Veröffentlichungsnummer: WO 2016/141930

(56) Entgegenhaltungen:
- EP-A2- 0 952 374
- EP-A2- 1 904 760
- DE-A1-102012 200 966

## Beschreibung

Die Erfindung betrifft eine Drehmomentübertragungseinrichtung für einen Antriebsstrang eines Fahrzeugs, mit einem Schwungrad oder einem anderem Rotationsteil, das mindestens eine Schwungmasse aufweist und mit einem Fliehkraftpendelmodul, das mehrere Pendelmassen und eine die Pendelmassen tragende Trägereinrichtung aufweist und das mit dem Rotationsteil verbunden ist. Die Erfindung betrifft weiterhin ein entsprechendes Fliehkraftpendelmodul für eine modular aufgebaute Drehmomentübertragungseinrichtung eines Antriebsstrangs eines Fahrzeugs, mit einer Fliehkraftpendeleinrichtung, die mehrere Pendelmassen und eine die Pendelmassen tragende Trägereinrichtung aufweist.

Eine entsprechende Drehmomentübertragungseinrichtung ist beispielsweise aus der DE 10 2012 221 949 A1 bekannt. Diese zeigt eine Drehmomentübertragungseinrichtung für einen Antriebsstrang eines Fahrzeugs, mit einem eine Schwungmasse aufweisenden Einmasse-Schwungrad und mit einem Fliehkraftpendelmodul, das mehrere Pendelmassen und eine die Pendelmassen tragende Trägereinrichtung aufweist, wobei das Fliehkraftpendelmodul über seine Trägereinrichtung an der Schwungmasse mittels Schrauben befestigt ist. In einem Kraftfahrzeug-Antriebsstrang ist eine solche Drehmomentübertragungseinrichtung in der Regel zwischen einer Brennkraftmaschine oder einer anderen Antriebsmaschine und einem Getriebe zwischengeschaltet. Das Fliehkraftpendelmodul ist dabei als vormontiertes Modul zur Bildung eines Fliehkraftpendels der Drehmomentübertragungseinrichtung ausgestaltet und wird "als Ganzes" mit dem Rotationsteil verbunden.

Die DE 10 2012 200 966 A1 offenbart ebenfalls eine derartige Drehmomentübertragungseinrichtung und wird als nächstliegender Stand der Technik betrachtet.

In den Brennräumen der Brennkraftmaschine laufen Verbrennungsvorgänge ab, die durch ihre bauartbedingte Betriebsweise ein nicht kontinuierliches Drehmoment auf die den Antriebsstrang antreibende Kurbelwelle übertragen. Infolgedessen treten Dreh- oder Torsionsschwingungen auf, zu deren Dämpfung sogenannte Drehschwingungsdämpfer und/oder Drehschwingungstilger eingesetzt werden. Drehschwingungsdämpfer sind beispielsweise in Kupplungsscheiben einer Reibungskupplung oder in Ein- oder Zweimassenschwungrädern integriert. Eine besondere Bauform eines Drehschwingungstilgers ist das Fliehkraftpendel, bei dem Pendelmassen auf Pendelbahnen mit Umfangs- und Radialanteil verlagerbar angeordnet sind, sodass die Pendelmassen bei Drehschwingungen unterschiedliche Radien einnehmen und damit das Trägheitsmoment des die Pendelmassen aufnehmenden Bauteils erhöht und das Bauteil damit kurzzeitig abgebremst wird. Fliehkraftpendeleinrichtungen werden zumeist in einem Ein- oder Zweimassenschwungrad oder in einer Kupplungseinheit einer Reibungskupplung im Antriebsstrang verbaut. Ein entsprechendes Einmasseschwungrad kann beispielsweise aus Stahl gefertigt sein.

In der Regel sind die Drehmomentübertragungseinrichtungen in Kraftfahrzeug-Antriebssträngen frei von Unwuchten, also ausgewuchtet. Bei einigen Anwendungen, beispielsweise bei der Verwendung einer 3 Zylinder Brennkraftmaschine als Antriebsmaschine des Antriebsstrangs, ist jedoch oft eine gezielte Unwucht in einer der Drehmomentübertragungseinrichtungen des Antriebsstrangs vorgesehen. Um diese Unwucht einzuführen, ist es notwendig eine bestimmte Menge Material gezielt wegzunehmen. Bei den bekannten Drehmomentübertragungseinrichtungen mit Schwungrad und Fliehkraftpendelmodul ist es nicht oder nur sehr eingeschränkt möglich, genügend Material wegzunehmen, ohne die Berst- und Impactsteifigkeit oder die geometrische Anforderungen der Teilen zu gefährden.

Es ist die Aufgabe der Erfindung eine Drehmomentübertragungseinrichtung und ein entsprechendes Fliehkraftpendelmodul zum Aufbau einer solchen Drehmomentübertragungseinrichtung anzugeben, die die genannten Schwierigkeiten überwinden.

Die Lösung der Aufgabe erfolgt erfindungsgemäß durch die Merkmale der unabhängigen Ansprüche. Bevorzugte Ausgestaltungen der Erfindung sind in den Unteransprüchen angegeben, die jeweils einzeln oder in Kombination einen Aspekt der Erfindung darstellen können.

Bei der erfindungsgemäßen Drehmomentübertragungseinrichtung für ein Kraftfahrzeug-Antriebsstrang ist vorgesehen, dass diese Drehmomentübertragungseinrichtung weiterhin ein mit der Trägereinrichtung und/oder dem Rotationsteil verbundenes scheibenförmiges Plattenelement aufweist, in dem eine oder mehrere Wuchtausnehmungen zum Auswuchten oder zum Einstellen einer vorbestimmten Unwucht ausgebildet sind. Das scheibenförmige Plattenelement ist dabei also ein zusätzliches Bauteil der Drehmomentübertragungseinrichtung. Dieses zusätzliche scheibenförmige Plattenelement ist vorzugsweise durch eine Vernietung mittels Nieten und/oder eine Warzenvernietung und/oder eine Verschraubung mittels Schrauben und/oder eine Verschweißung mittels Schweißstellen mit der Trägereinrichtung und/oder dem Rotationsteil verbunden. Die Wuchtausnehmung oder zumindest eine der Wuchtausnehmungen ist bevorzugt sacklochartig ausgebildet, insbesondere als sacklochartiges Bohrloch (Sacklochbohrung) ausgebildet. Derartige Bohrlöcher werden durch Bohren, insbesondere mittels eines Flachbohrers, erstellt.

Eine solche Wuchtausnehmung kann dabei zwei unterschiedliche Funktionen haben, nämlich (i) das Auswuchten des Fliehkraftpendelmoduls selbst und (ii) das Auswuchten oder gezielte Einstellen einer Unwucht der Drehmomentübertragungseinrichtung, in die dieses Modul eingebaut ist. Sollen beide Funktionen erfüllt werden, so sind bevorzugt mehrere Wuchtausnehmungen im Plattenelement ausgebildet, nämlich zumindest eine Wuchtausnehmung für die erste Funktion (i) und zumindest eine weitere Wuchtausnehmung für die zweite Funktion (ii).

Gemäß einer bevorzugten Ausgestaltung der Erfindung sind daher in dem scheibenförmigen Plattenelement mehrere Wuchtausnehmungen ausgebildet, von denen (i) mindestens eine Wuchtausnehmung als Wuchtausnehmung zum Auswuchten der Fliehkraftpendeleinrichtung und (ii) mindestens eine andere Wuchtausnehmung als Wuchtausnehmung zum Auswuchten oder zum gezielten Einstellen einer Unwucht der Drehmomentübertragungseinrichtung ausgebildet ist.

Gemäß einer weiteren bevorzugten Ausgestaltung der Erfindung weist das vormontierte Fliehkraftpendelmodul das scheibenförmige Plattenelement auf. Bevorzugt ist das Plattenelement dazu modulintern, also Rotationsteil-unabhängig, an zumindest einer Stelle mit der Trägereinrichtung verbunden.

Dabei ist insbesondere vorgesehen, dass die Drehmomentübertragungseinrichtung allein durch das Rotationsteil, das Fliehkraftpendelmodul und mindestens eine diese beiden Elemente verbindende Verbindungsstruktur gebildet wird. Die Verbindungsstruktur kann zwar Verbindungselemente aufweisen, aber darüber hinaus sind bei dieser Ausführungsform jedoch keine weiteren Komponenten vorgesehen. Dies ist die allereinfachste Ausgestaltung dieser modular aufgebauten Drehmomentübertragungseinrichtung. Bevorzugt sind mehrere Verbindungsstrukturen vorgesehen. Diese können als Vorverbindung und als Hauptverbindung ausgebildet sein.

Gemäß einer weiteren bevorzugten Ausgestaltung der Erfindung weist die Schwungmasse ein Flanschteil auf, an dem das Fliehkraftpendelmodul mittels der mindestens einen Verbindungsstruktur befestigt ist. Dabei ist vorgesehen, dass die Befestigung durch eine Vernietung mittels Nieten, eine Warzenvernietung, eine Verschraubung mittels Schrauben und/oder eine Verschweißung mittels Schweißstellen erfolgt. So können also beispielsweise Vorvernietungen und Hauptvernietungen vorgesehen sein.

Mit Vorteil ist weiterhin vorgesehen, dass das Rotationsteil als Einmasse-Schwungrad mit genau einer Schwungmasse ausgebildet. Mit einer derart einfach ausgebildeten Drehmomentübertragungseinrichtung lassen sich die Drehschwingungen vieler Arten von Antriebssträngen hinreichend gut reduzieren.

Gemäß noch einer weiteren bevorzugten Ausführungsform der Erfindung ist das scheibenförmige Plattenelement auf der dem Rotationsteil abgewandten Seite der Fliehkraftpendeleinrichtung angeordnet. Selbst bei fertigmontierter Drehmomentübertragungseinrichtung ist ein Zugriff auf die Wuchtausnehmung(en) möglich. Dabei ist die mindestens eine Wuchtausnehmung bevorzugt auf der dem Rotationsteil und dem Fliehkraftpendelmodul abgewandten Seite des Plattenelements ausgebildet.

Optional ist mit Vorteil vorgesehen, dass das Rotationsteil an seinem Außenumfang ein Drehzahlgeberelement aufweist. Drehzahlgeberelemente sind für Drehmomentübertragungseinrichtungen eines Antriebsstrangs durchaus bekannt.

Das Rotationsteil ist insbesondere ganz oder teilweise aus Stahl. Der Stahl des Rotationsteils bzw. der einzelnen Komponenten des Rotationsteils ist bevorzugt ganz oder teilweise gehärteter Stahl.

Gemäß noch einer weiteren bevorzugten Ausführungsform der Erfindung weist das Rotationsteil an seinem Außenumfang einen Zahnkranz, insbesondere Anlasserzahnkranz, auf. Ist auch der Zahnkranz aus Stahl, so ist zumindest die Verzahnung dieses Zahnkranzes bevorzugt gehärtet.

Die Erfindung betrifft weiterhin ein Fliehkraftpendelmodul für eine modular aufgebaute Drehmomentübertragungseinrichtung, insbesondere eine vorstehend benannte Drehmomentübertragungseinrichtung, eines Kraftfahrzeug-Antriebsstrangs. Dieses Modul umfasst ein Fliehkraftpendel mit mehreren Pendelmassen und einer die Pendelmassen tragende Trägereinrichtung. Erfindungsgemäß ist vorgesehen, dass dieses Fliehkraftpendelmodul weiterhin ein mit der Trägereinrichtung verbundenes scheibenförmiges Plattenelement aufweist, in dem eine oder mehrere Wuchtausnehmungen zum Auswuchten oder zum Einstellen einer vorbestimmten Unwucht ausgebildet sind. Das scheibenförmige Plattenelement ist dabei also ein zusätzliches Bauteil des Fliehkraftpendelmoduls. Dieses zusätzliche scheibenförmige Plattenelement ist vorzugsweise durch eine Vernietung mittels Nieten und/oder eine Warzenvernietung und/oder eine Verschraubung mittels Schrauben und/oder eine Verschweißung mittels Schweißstellen mit der Trägereinrichtung verbunden. Die Wuchtausnehmung oder zumindest eine der Wuchtausnehmungen ist bevorzugt sacklochartig ausgebildet, insbesondere als sacklochartige Bohrlöcher ausgebildet. Derartige Bohrlöcher werden durch Bohren, insbesondere mit einem Flachbohrer, erstellt.

Das Fliehkraftpendelmodul ist weiterhin dazu eingerichtet in wohldefinierter Weise mit mindestens einem anderen Bauteil der zu bildenden Drehmomentübertragungseinrichtung verbunden zu werden. Dazu sind insbesondere Strukturen für entsprechende Verbindungselemente wie etwa Schrauben, Nieten, etc. vorgesehen.

Die Erfindung betrifft weiterhin auch einen Antriebsstrang für ein Kraftfahrzeug (also einen Kraftfahrzeug-Antriebsstrang). Dieser Antriebsstrang weist eine vorstehend genannte Drehmomentübertragungseinrichtung auf. Die gängigen Ausführungsformen und die generelle Funktion von Drehmomentübertragungseinrichtungen im Antriebsstrang eines Kraftfahrzeugs sind aus einer Vielzahl von Patentanmeldungen und anderen Dokumenten der Anmelderin bekannt. Die Drehmomentübertragungseinrichtung ist im Antriebsstrang vorzugsweise zwischen einer Antriebsmaschine und einem Getriebe dieses Antriebsstrangs angeordnet.

Nachfolgend wird die Erfindung unter Bezugnahme auf die anliegenden Zeichnungen anhand von bevorzugten Ausführungsbeispielen exemplarisch erläutert, wobei die nachfolgend dargestellten Merkmale sowohl jeweils einzeln als auch in Kombination einen Aspekt der Erfindung darstellen können. Es zeigen:
- Fig. 1:: eine Drehmomentübertragungseinrichtung gemäß einer ersten bevorzugten Ausführungsform der Erfindung in einer Schnittdarstellung,
- Fig. 2:: die Drehmomentübertragungseinrichtung gemäß einer zweiten bevorzugten Ausführungsform der Erfindung in einer Schnittdarstellung,
- Fig. 3:: die Drehmomentübertragungseinrichtung in einer Seitenansicht mit Blick auf ein scheibenförmiges Plattenelement,
- Fig. 4:: die in Fig. 2 gezeigte Drehmomentübertragungseinrichtung in einer Schnittdarstellung entlang einer weiteren Schnittlinie,
- Fig. 5:: die in Fig. 2 gezeigte Drehmomentübertragungseinrichtung in einer Schnittdarstellung entlang einer anderen Schnittlinie und
- Fig. 6:: die in Fig. 2 gezeigte Drehmomentübertragungseinrichtung in einer Schnittdarstellung entlang noch einer anderen Schnittlinie.

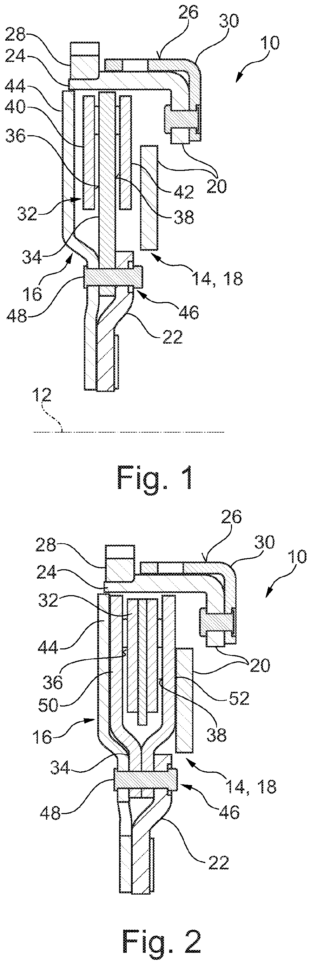

Die Fig. 1 zeigt in einer Schnittdarstellung eine Drehmomentübertragungseinrichtung 10 für einen Antriebsstrang eines Fahrzeugs, genauer gesagt eines Kraftfahrzeugs. Dabei ist lediglich die obere Hälfte der Drehmomentübertragungseinrichtung 10 bis zu einer Drehachse 12 dargestellt. Die gezeigte Drehmomentübertragungseinrichtung 10 weist im Wesentlichen zwei Baugruppen 14, 16 auf, nämlich ein als Schwungrad 18 ausgebildetes Rotationsteil 14 und ein Fliehkraftpendelmodul 16. Dieses Fliehkraftpendelmodul 16 wird oft auch als Fliehkraftpendel-Unterzusammenbau bezeichnet. Daneben kann die Drehmomentübertragungseinrichtung 10 selbstverständlich auch noch andere Baugruppen beziehungsweise Bauelemente aufweisen. Denkbar ist zum Beispiel, dass die Drehmomentübertragungseinrichtung 10 weiterhin Bauteile aufweist, die alleine oder zusammen mit dem Rotationsteil 14 und/oder dem Fliehkraftpendelmodul 16 eine Reibungskupplung des Fahrzeugs bilden. Im gezeigten Beispiel wird die Drehmomentübertragungseinrichtung 10 jedoch allein durch das Rotationsteil 14 und das Fliehkraftpendelmodul 16 gebildet. Derartige Drehmomentübertragungseinrichtungen 10 sind bei Antriebssträngen von Kraftfahrzeugen im Allgemeinen zwischen der jeweiligen Kurbelwelle der Brennkraftmaschine (des Verbrennungsmotors) und einer entsprechenden Getriebeeingangswelle eines Getriebes (beides nicht gezeigt) zwischengeschaltet.

Das in diesem Beispiel gezeigte Schwungrad 18 ist als ein Einmasseschwungrad mit einer im radialen Außenbereich angeordneten Schwungmasse (einem Schwungmassenkörper) 20 ausgebildet. Im Innenbereich befindet sich ein Flanschteil 22 des Schwungrades 18. Dieses Flanschteil 22 ist gekröpft ausgebildet. Die Schwungmasse 20 und das Flanschteil 22 sind einstückig miteinander verbunden. Die Schwungmasse 20 weist außenumfänglich einen schutzblechartig geformten Teil 24 auf, mit dem das Schwungrad 18 das montierte Fliehkraftpendelmodul 16 radial außen übergreift, sodass das Fliehkraftpendelmodul 16 in das Schwungrad 18 "eingebettet" ist. Am Außenumfang 26 der Schwungmasse 20 ist ein als Anlasserzahnkranz fungierender Zahnkranz 28 und ein Drehzahlgeberelement 30 (auch kurz als Geberelement bezeichnet) befestigt. Zahnkranz 28 und Geberelement 30 sind dabei Teil des Rotationsteils 14. Der Zahnkranz 28 ist beispielsweise auf die Schwungmasse 30 aufgeschrumpft und das Geberelement 30 ist mit der Schwungmasse 20 vernietet.

Das Fliehkraftpendelmodul 16 weist mehrere Pendelmassen 32 (von denen jedoch nur eine dargestellt ist) und eine diese Pendelmassen 32 tragende Trägereinrichtung 34 auf. Jede der Pendelmassen 32 ist im gezeigten Beispiel zweiteilig ausgeführt. Die Trägereinrichtung 34 weist einen inneren Abschnitt zur Befestigung des Fliehkraftpendelmoduls 16 am Rotationsteil 14 und einen äußeren Abschnitt auf, an dem die Pendelmassen 32 tatsächlich gehalten werden. Zumindest der innere Anschnitt der Trägereinrichtung 34 ist ebenfalls als Flanschteil ausgeführt.

Das eigentliche Fliehkraftpendel des Fliehkraftpendelmoduls 16 ist wie Folgt aufgebaut: Jede der Pendelmassen 32 wird mittels mindestens einer (nicht gezeigten) Kulissenführung entlang von Führungsflächen 36, 38 der Trägereinrichtung 34 auf entsprechenden Bahnen geführt. Dazu ist jede der Pendelmassen 32 mit (nicht gezeigten) Kulissenausnehmungen sowie die Trägereinrichtung 34 mit weiteren (nicht gezeigten) Kulissenausnehmungen zum Eingriff mindestens einer (nicht gezeigten) Führungsrolle versehen. Pro Pendelmasse 32 sind beispielsweise je zwei Führungsrollen vorgesehen. Jeder der Führungsrollen durchgreift eine Kulissenausnehmung ihrer zugeordneten Pendelmasse 32 und die weiteren Kulissenausnehmungen des die Führungsflächen 36, 38 bildenden äußeren Abschnitts der Trägereinrichtung 34. Die Kulissenausnehmungen bilden dabei Rollenbahnen der Führungsrollen. Jede der zweiteiligen Pendelmassen 32 ist im Beispiel der Fig. 1, als Blechpaketpaar ausgeführt, dessen Blechpakete mittels (nicht gezeigter) Nieten zusammengehalten werden, wobei bei jeder der Pendelmassen 34 das eine Paket 40 auf der einen Seite und das andere Paket 42 auf der anderen Seite der die Führungsflächen 36, 38 bereitstellenden und als Führungsflansch ausgebildeten Trägereinrichtung 34 angeordnet ist.

Das Fliehkraftpendelmodul 16 weist als weiteres Bauteil ein scheibenförmiges Plattenelement 44 auf. Dieses scheibenförmige Plattenelement 44 ist auf der dem Rotationsteil 14 abgewandten Seite der Fliehkraftpendeleinrichtung 16 angeordnet und mittels Verbindungsstrukturen 46 mit der Trägereinrichtung 34 und dem Flanschteil 22 des Rotationsteils 14 verbunden. Die Verbindungsstruktur 46 ist als eine Vernietung mittels Nieten 48 realisiert, die als Vorvernietung ausgeführt ist. Prinzipiell sind - neben der gezeigten Vernietung- jedoch auch andere Formen der Befestigung realisierbar (Warzenvernietung, Verschraubung, Verschweißung, etc.). Die hier gezeigte Verbindungsstruktur 46 bildet eine Hauptverbindung zwischen Fliehkraftpendelmodul 16 und dem als Schwungrad 18 ausgebildeten Rotationsteil 14.

Die Drehmomentübertragungseinrichtung 10 der Fig. 2 entspricht im Wesentlichen der Drehmomentübertragungseinrichtung 10 der Fig. 1, sodass hier nur auf die Unterschiede eingegangen wird.

Die Pendelmassen 32 des Fliehkraftpendelmoduls 16 der Fig. 2 sind im Gegensatz zu denen der Fig. 1 jeweils als einteilige Blechpakete ausgebildet, die zwischen zwei Führungsflanschen 50, 52 der Trägereinrichtung 34 geführt wird. Dabei bildet die jeweilige nach innen weisende Seitenfläche der Führungsflansche 50, 52 je eine Führungsfläche 36, 38. Das Flanschteil der Trägereinrichtung 34 der Fig. 2 ist einstückig mit dem einen der beiden Führungsflanschen 50, 52 ausgeführt.

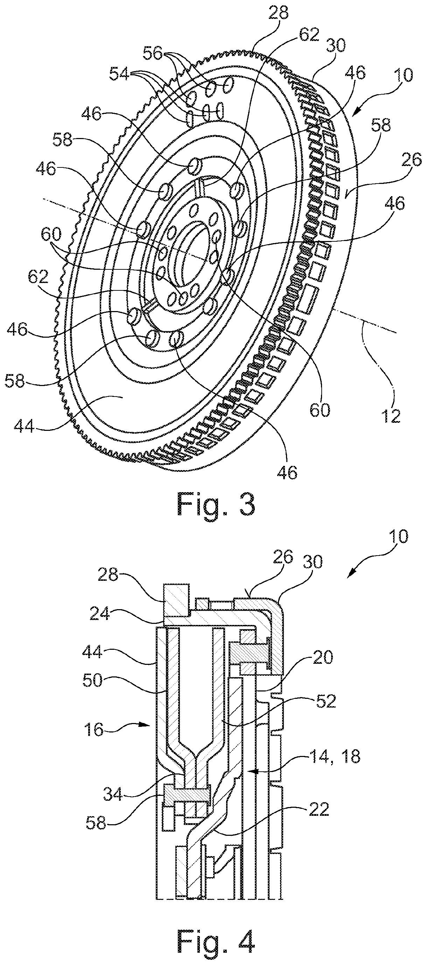

Die Fig. 3 zeigt die Drehmomentübertragungseinrichtung 10 in einer Seitenansicht mit Blick auf das scheibenförmige Plattenelement 44. Dabei ist gut erkennbar, dass in diesem Plattenelement 44 mehrere (im gezeigten Beispiel sechs) Wuchtausnehmungen 54, 56 ausgebildet sind. Von diesen Wuchtausnehmungen 54, 56 sind einige (im gezeigten Beispiel drei) Wuchtausnehmung 54 als Wuchtausnehmung zum Auswuchten des Fliehkraftpendelmoduls 16 und (im gezeigten Beispiel drei) andere Wuchtausnehmungen 56 als Wuchtausnehmung zum Auswuchten oder zum gezielten Einstellen einer Unwucht der Drehmomentübertragungseinrichtung 10 insgesamt ausgebildet.

Auch in dieser Darstellung sind die als Hauptvernietungen ausgeführten Verbindungsstrukturen 46 zwischen dem Flanschteil 22 des Schwungrades 18, der Trägereinrichtung 34 und dem Plattenelement 44 gezeigt. Daneben sind jedoch auch mehrere als Vorvernietungen ausgeführte Fliehkraftmodul-interne Verbindungsstrukturen 58 zwischen der Trägereinrichtung 34 und dem Plattenelement 44 vorgesehen. Diese werden auch in der Schnittdarstellung der Fig. 4 gezeigt.

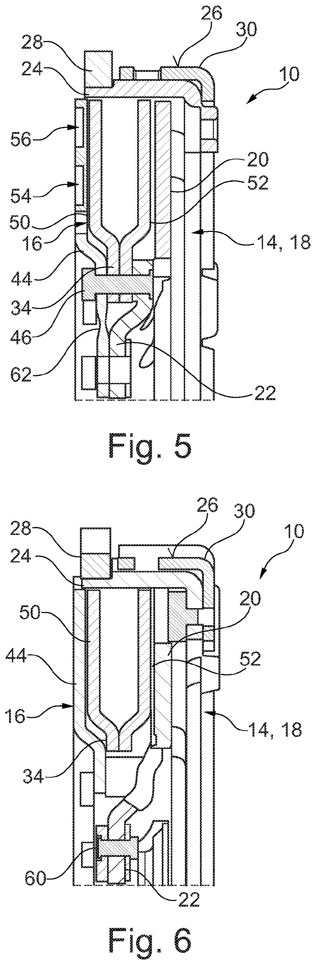

Alternativ oder zusätzlich gibt es mehrere als Vorvernietungen ausgeführte Verbindungsstrukturen 60 zwischen dem Flanschteil 22 des als Schwungrad 18 ausgebildeten Rotationsteils 14 und dem Plattenelement 44 an radial weiter innenliegenden Positionen. Diese werden auch in der Schnittdarstellung der Fig. 6 gezeigt.

Im Bereich der Verbindungsstrukturen 46 der Hauptverbindung weist das Plattenelement 44 angeprägte Verbindungslappen 62 zu einem als Deckscheibe bezeichneten innenliegenden Flanschteil auf. Diese angeprägte Verbindungslappen 62 werden auch in der Schnittdarstellung der Fig. 5 gezeigt.

Es ergeben sich folgende Funktionen:
Durch die gezeigte Ausgestaltung der Drehmomentübertragungseinrichtung 10 mit dem Plattenelement 44 ergibt sich
- eine gezielte Unwucht aufgrund der einen oder mehreren in den Figuren 3 und 5 gezeigten Wuchtausnehmungen (Wuchtaussparungen) 54, 56,
- ein als Fliehkraftpendelmodul 16 bezeichneter Fliehkraftpendel-Unterzusammenbau (FKP-UZSB), der das die mindestens eine Wuchtausnehmung 54, 56 aufweisende Plattenelement 44 umfasst,
- die Möglichkeit den Zusammenbau von Fliehkraftpendelmodul 16 und Rotationsteil 14 mit Bohrungen oder Wuchtgewichten zu wuchten,
- durch die Deckscheibe (einem Blech zwischen Kurbelwelle und der Schwungscheibe) die Möglichkeit die Festigkeit um die Schwungscheibe zu verbessern sowie
- durch die (zum Beispiel durch Anprägung erstellten) verformbaren Verbindungslappen 62 zwischen dem Plattenelement 44 und Deckscheibe eine leichte Montage zu ermöglichen (Hauptvernietung 48 mit dem Schwungrad 18 und Vorvernietung 60 am Innendurchmesser ist überbestimmt).

### Bezugszeichenliste

- 10: Drehmomentübertragungseinrichtung
- 12: Drehachse
- 14: Rotationsteil
- 16: Fliehkraftpendelmodul
- 18: Schwungrad
- 20: Schwungmasse
- 22: Flanschteil
- 24: Element
- 26: Außenumfang
- 28: Zahnkranz
- 30: Drehzahlgeberelement
- 32: Pendelmasse
- 34: Trägereinrichtung
- 36: Führungsfläche
- 38: Führungsfläche
- 40: Paket
- 42: Paket
- 44: Plattenelement
- 46: Verbindungsstruktur (Hauptvernietung)
- 48: Verbindungselement
- 50: Führungsflansch
- 52: Führungsflansch
- 54: Wuchtausnehmung
- 56: Wuchtausnehmung
- 58: Verbindungsstruktur (Vorvernietung)
- 60: Verbindungsstruktur (Vorvernietung)
- 62: Verbindungslappen (angeprägt)

## Patentansprüche

1. Drehmomentübertragungseinrichtung (10) für einen Antriebsstrang eines Fahrzeugs, mit
- einem Schwungrad (18) oder einem anderem Rotationsteil (14), das mindestens eine Schwungmasse (20) aufweist, und
- einem Fliehkraftpendelmodul (16), das mehrere Pendelmassen (32) und eine die Pendelmassen (32) tragende Trägereinrichtung (34) aufweist und das mit dem Rotationsteil (14) verbunden ist,
**gekennzeichnet durch** ein mit der Trägereinrichtung (34) und/oder dem Rotationsteil (14) verbundenes scheibenförmiges Plattenelement (44), in dem mindestens eine Wuchtausnehmung (54, 56) zum Auswuchten oder zum Einstellen einer vorbestimmten Unwucht ausgebildet ist.

2. Drehmomentübertragungseinrichtung nach Anspruch 1, **dadurch gekennzeichnet, dass** in dem scheibenförmigen Plattenelement (44) mehrere Wuchtausnehmungen (54, 56) ausgebildet sind, von denen
- mindestens eine Wuchtausnehmung (54) als Wuchtausnehmung zum Auswuchten des Fliehkraftpendelmoduls (16) und
- mindestens eine andere Wuchtausnehmung (56) als Wuchtausnehmung zum Auswuchten oder zum gezielten Einstellen einer Unwucht der Drehmomentübertragungseinrichtung (10)
ausgebildet ist.

3. Drehmomentübertragungseinrichtung nach Anspruch 1 oder 2, **dadurch gekennzeichnet, dass** das Fliehkraftpendelmodul (16) das scheibenförmige Plattenelement (44) aufweist.

4. Drehmomentübertragungseinrichtung nach Anspruch 3, **dadurch gekennzeichnet, dass** die Drehmomentübertragungseinrichtung (10) allein durch das Rotationsteil (14), das Fliehkraftpendelmodul (16) und mindestens eine diese beiden Elemente verbindende Verbindungsstruktur (46, 58) gebildet wird.

5. Drehmomentübertragungseinrichtung nach einem der Ansprüche 1 bis 4, **dadurch gekennzeichnet, dass** die Schwungmasse (20) ein Flanschteil (22) aufweist, an dem das Fliehkraftpendelmodul (16) mittels der mindestens einen Verbindungsstruktur (46) befestigt ist.

6. Drehmomentübertragungseinrichtung nach Anspruch 5, **dadurch gekennzeichnet, dass** die Befestigung durch eine Vernietung mittels Nieten (48), einer Warzenvernietung, einer Verschraubung mittels Schrauben und/oder einer Verschweißung mittels Schweißstellen erfolgt.

7. Drehmomentübertragungseinrichtung nach einem der Ansprüche 1 bis 6, **dadurch gekennzeichnet, dass** das scheibenförmige Plattenelement (44) auf der dem Rotationsteil (14) abgewandten Seite der Fliehkraftpendeleinrichtung (16) angeordnet ist.

8. Drehmomentübertragungseinrichtung nach einem der Ansprüche 1 bis 7, **dadurch gekennzeichnet, dass** das Rotationsteil (14) an seinem Außenumfang (26) ein Drehzahlgeberelement (30) aufweist.

9. Drehmomentübertragungseinrichtung nach einem der Ansprüche 1 bis 8, **dadurch gekennzeichnet, dass** das Rotationsteil (14) an seinem Außenumfang einen Zahnkranz (28) aufweist.

10. Fliehkraftpendelmodul (16) für eine modular aufgebaute Drehmomentübertragungseinrichtung (10) eines Antriebsstrangs eines Fahrzeugs, insbesondere für eine Drehmomentübertragungseinrichtung (10) nach einem der Ansprüche 1 bis 9, mit mehreren Pendelmassen (32) und einer die Pendelmassen (32) tragenden Trägereinrichtung (34), **gekennzeichnet durch** ein mit der Trägereinrichtung (34) verbundenes scheibenförmiges Plattenelement (44), in dem mindestens eine Wuchtausnehmung (54, 56) zum Auswuchten oder zum Einstellen einer vorbestimmten Unwucht ausgebildet ist.

## Claims

1. Torque transmission device (10) for a drive train of a vehicle having
- a flywheel (18) or another rotational part (14) which has at least one flywheel mass (20), and
- a centrifugal force pendulum module (16) which has a plurality of pendulum masses (32) and a carrier device (34) which supports the pendulum masses (32), which centrifugal force pendulum module (16) is connected to the rotational part (14),
**characterized by** a disc-shaped plate element (44) which is connected to the carrier device (34) and/or the rotational part (14) and in which at least one balance recess (54, 56) for balancing or for setting of a predefined unbalance is configured.

2. Torque transmission device according to Claim 1, **characterized in that** a plurality of balance recesses (54, 56) are configured in the disc-shaped plate element (44), of which balance recesses (54, 56)
- at least one balance recess (54) is configured as a balance recess for balancing the centrifugal force pendulum module (16), and
- at least one other balance recess (56) is configured as a balance recess for balancing or for targeted setting of an unbalance of the torque transmission device (10).

3. Torque transmission device according to Claim 1 or 2, **characterized in that** the centrifugal force pendulum module (16) has the disc-shaped plate element (44).

4. Torque transmission device according to Claim 3, **characterized in that** the torque transmission device (10) is formed solely by way of the rotational part (14), the centrifugal force pendulum module (16), and at least one connecting structure (46, 58) which connects the said two elements.

5. Torque transmission device according to one of Claims 1 to 4, **characterized in that** the flywheel mass (20) has a flange part (22), to which the centrifugal force pendulum module (16) is fastened by means of the at least one connecting structure (46).

6. Torque transmission device according to Claim 5, **characterized in that** the fastening takes place by way of a rivet connection by means of rivets (48), a nipple rivet connection, a screw connection by means of screws, and/or a welded connection by means of welded points.

7. Torque transmission device according to one of Claims 1 to 6, **characterized in that** the disc-shaped plate element (44) is arranged on that side of the centrifugal force pendulum device (16) which faces away from the rotational part (14).

8. Torque transmission device according to one of Claims 1 to 7, **characterized in that** the rotational part (14) has a rotational speed sensor element (30) on its outer circumference (26).

9. Torque transmission device according to one of Claims 1 to 8, **characterized in that** the rotational part (14) has a toothed rim (28) on its outer circumference.

10. Centrifugal force pendulum module (16) for a torque transmission device (10) of modular construction of a drive train of a vehicle, in particular for a torque transmission device (10) according to one of Claims 1 to 9, having a plurality of pendulum masses (32) and a carrier device (34) which supports the pendulum masses (32), **characterized by** a disc-shaped plate element (44) which is connected to the carrier device (34) and in which at least one balance recess (54, 56) for balancing or for setting of a predefined unbalance is configured.

## Revendications

1. Dispositif de transmission de couple (10) destiné à une transmission d'un véhicule, ledit dispositif comprenant
- un volant d'inertie (18) ou un autre élément rotatif (14) qui comporte au moins un volant d'inertie (20), et
- un module pendulaire centrifuge (16) qui comporte une pluralité de masses pendulaires (32) et un dispositif de support (34) supportant les masses pendulaires (32) et qui est relié à l'élément rotatif (14),
**caractérisé par** un élément (44) en forme de plaque qui est relié au dispositif de support (34) et/ou à l'élément de rotation (14) et dans lequel au moins un évidement d'équilibrage (54, 56) est ménagé pour effectuer un équilibrage ou régler un déséquilibre prédéterminé.

2. Dispositif de transmission de couple selon la revendication 1, **caractérisé en ce que** l'élément (44) en forme de plaque comprend une pluralité d'évidements d'équilibrage (54, 56) dont
- au moins un évidement d'équilibrage (54) est conçu comme un évidement d'équilibrage du module pendulaire centrifuge (16) et
- au moins un autre évidement d'équilibrage (56) est conçu comme un évidement d'équilibrage destiné à effectuer un équilibrage ou un réglage sélectif d'un déséquilibre du dispositif de transmission de couple (10) .

3. Dispositif de transmission de couple selon la revendication 1 ou 2, **caractérisé en ce que** le module pendulaire centrifuge (16) comporte l'élément (44) en forme de plaque.

4. Dispositif de transmission de couple selon la revendication 3, **caractérisé en ce que** le dispositif de transmission de couple (10) est formé uniquement par l'élément rotatif (14), le module pendulaire centrifuge (16) et au moins une structure de liaison (46, 58) reliant ces deux éléments.

5. Dispositif de transmission de couple selon l'une des revendications 1 à 4, **caractérisé en ce que** le volant d'inertie (20) comporte un élément formant bride (22) sur lequel le module pendulaire centrifuge (16) est fixé au moyen d'au moins une structure de liaison (46) .

6. Dispositif de transmission de couple selon la revendication 5, **caractérisé en ce que** la fixation est effectuée par rivetage au moyen de rivets (48), rivetage à bossages, vissage à l'aide de vis et/ou soudage à l'aide de points de soudure.

7. Dispositif de transmission de couple selon l'une des revendications 1 à 6, **caractérisé en ce que** l'élément (44) en forme de plaque est disposé du côté du dispositif pendulaire centrifuge (16) qui est opposé à l'élément rotatif (14).

8. Dispositif de transmission de couple selon l'une des revendications 1 à 7, **caractérisé en ce que** l'élément rotatif (14) comporte sur sa périphérie extérieure (26) un élément formant capteur de vitesse de rotation (30).

9. Dispositif de transmission de couple selon l'une des revendications 1 à 8, **caractérisé en ce que** l'élément rotatif (14) comporte sur sa périphérie extérieure une couronne dentée (28).

10. Module pendulaire centrifuge (16) destiné à un dispositif de transmission du couple (10) modulaire d'une transmission d'un véhicule, en particulier à un dispositif de transmission de couple (10) selon l'une des revendications 1 à 9, ledit module pendulaire centrifuge comprenant une pluralité de masses pendulaires (32) et un dispositif de support (34) supportant les masses pendulaires (32), **caractérisée par** un élément (44) en forme de plaque qui est relié au dispositif de support (34) et dans lequel au moins un évidement d'équilibrage (54, 56) est ménagé pour effectuer un équilibrage ou régler un déséquilibre prédéterminé.
